# EUROPÄISCHE PATENTSCHRIFT

(11) **EP 3 180 562 B1**
(45) Veröffentlichungstag und Bekanntmachung des Hinweises auf die Patenterteilung: **29.11.2017**
(21) Anmeldenummer: 15810726.8
(22) Anmeldetag: 07.09.2015
(51) Int. Cl.: F21S 8/10

(54) **FAHRZEUGSCHEINWERFER**
VEHICLE HEADLAMP
PAHRE DE VÉHICULE

(30) Priorität: 24.09.2014 AT 506832014
(43) Veröffentlichungstag der Anmeldung: 21.06.2017
(73) Patentinhaber: ZKW Group GmbH, 3250 Wieselburg (AT)
(72) Erfinder: GRAFENEDER, Markus, A-3342 Opponitz (AT); SCHLINGER, Thomas, A-3071 Böheimkirchen (AT); GODDERIDGE, Sebastian, A-3382 Roggendorf (AT); ZORN, Jürgen, A-3511 Oberfucha (AT)
(74) Vertreter: Patentanwaltskanzlei Matschnig & Forsthuber OG
(86) Internationale Anmeldenummer: PCT/AT2015/050216
(87) Internationale Veröffentlichungsnummer: WO 2016/044870

(56) Entgegenhaltungen:
- WO-A1-2014/121312
- AT-A1- 510 454
- FR-A1- 2 982 006
- JP-A- 2013 030 371
- JP-A- 2013 114 939
- US-A1- 2010 246 204

## Beschreibung

Die Erfindung betrifft einen Fahrzeugscheinwerfer umfassend ein Lichtmodul mit einem Lichtquellenträger, mit zumindest einer Lichtquelle und einem der zumindest einen Lichtquelle zugeordneten Reflektorteil, wobei Referenzierelemente am Reflektorteil mit entsprechenden Referenzierelementen am Lichtquellenträger in Wirkverbindung bringbar sind. Ein solcher Fahrzeugscheinwerfer ist aus dem Dokument WO 2014/121312 A1 bekannt. Die LED-Technik ist bei modernen Fahrzeugscheinwerfern mittlerweile weit verbreitet und ermöglicht einerseits sehr hohe Lichtausbeute und aufgrund der geringen Größe der Lichtquellen und anderer Teile des Systems große gestalterische Freiheiten beim Scheinwerferdesign. Andererseits ist bei der Montage der einzelnen Teile eines Lichtmoduls eines LED-Fahrzeugscheinwerfers eine größere Genauigkeit und Präzision vonnöten als bei herkömmlichen Glühfaden- oder Halogensystemen, da die sehr kleinen Lichtquellen hochpräzise bezüglich der entsprechenden Reflektorteile ausgerichtet sein müssen, um die strengen gesetzlichen Auflagen hinsichtlich des Lichtbilds und insbesondere hinsichtlich der zu vermeidenden Blendung des Gegenverkehrs zu erfüllen.

Bei der Herstellung der Lichtquellenträger bzw. der Platinen kommt es beim Bestücken derselben mit den LED-Lichtquellen zu geringfügigen Ungenauigkeiten hinsichtlich der Positionierung, weswegen die entsprechenden Reflektoren aufgrund besagter hoher Präzisionsanforderungen nicht einfach bezüglich der Ränder des Lichtquellenträgers positioniert werden können. Vielmehr müssen nach dem Bestückungsprozess die tatsächlichen Positionen der LEDs ermittelt werden und abhängig davon entsprechende Referenziermarken hergestellt werden. Hierbei ist es üblich, die Referenziermarken am Lichtquellenträger als Referenzierbohrungen auszuführen, mit denen entsprechende Referenzierstifte an den jeweiligen Reflektorteilen in Wirkverbindung bringbar sind, d.h. in welche die Referenzierstifte eingreifen können, sodass der Reflektorteil bezüglich der tatsächlichen Position der LED-Lichtquellen ausgerichtet und montiert werden kann.

Während diese Lösung bei der Erstmontage eines Fahrzeugscheinwerfers vollkommen zufriedenstellend ist, birgt sie für den Tausch von verbrauchten LED-Lichtquellen durch den Fahrzeughalter insofern Nachteile, als es zur Handhabung der Reflektorteile im Stand der Technik nötig wäre, den Scheinwerfer auszubauen oder zumindest weitgehend zu demontieren, um an die Reflektorteile zu gelangen, um diese vom Lichtquellenträger zu trennen und mit einem neuen Lichtquellenträger verbinden zu können. Dies ist dem Anwender klarerweise kaum zuzumuten, wobei es überhaupt als ungünstig anzusehen ist, wenn Teile wie Reflektoren freigelegt werden, da diese eine mechanisch überaus empfindliche reflektierende Beschichtung aufweisen, bei der auch nur Fingerabdrücke bereits zu erheblichen Leistungseinbußen des entsprechenden Scheinwerfers führen.

Der Erfindung liegt daher die Aufgabe zugrunde, das Austauschen von LED-Lichtquellen dahingehend zu verbessern, dass ein Austauschteil mit den LEDs weitgehend ohne die Verwendung von Werkzeug in den Scheinwerfer geschoben werden kann und das erneute Referenzieren bzw. Ausrichten der Reflektoren zu den LEDs zuverlässig und ohne Manipulation der Reflektoren durch den Anwender erfolgt.

Zur Lösung dieser Aufgabe ist ein Fahrzeugscheinwerfer der eingangs genannten Art erfindungsgemäß dahingehend weitergebildet, dass der Lichtquellenträger in einen Führungsteil mit Führungsschienen für den Reflektorteil einschiebbar ist und der Reflektorteil einen dem Lichtquellenträger zugeordneten Mitnehmer zum gemeinsamen Verschieben des Reflektorteils mit dem Lichtquellenträger entlang der Führungsschienen aufweist, wobei die Führungsschienen ausgeformt sind, um die Referenzierelemente am Reflektorteil beim Einschieben des Lichtquellenträgers mit den entsprechenden Referenzierelementen am Lichtquellenträger in Wirkverbindung zu bringen. Dadurch, dass ein Führungsteil für den Lichtquellenträger vorgesehen ist, der weiters Führungsschienen für den Reflektorteil aufweist, in denen der Reflektorteil durch die Wirkung eines Mitnehmer beim Einschieben des neuen Lichtquellenträgers in die Referenzierelemente bzw. -bohrungen auf dem Lichtquellenträger gebracht wird, erfolgt das Referenzieren des Reflektorteils gleichsam automatisch beim Einschieben des Austauschteils, d.h. des Lichtquellenträgers, ohne dass der Reflektorteil in irgendeiner Weise berührt werden muss. Hierbei ist es unproblematisch, dass sich die Referenzierbohrungen, wie oben beschrieben, aufgrund der geringfügig unterschiedlichen Positionierung der LEDs an ebenfalls geringfügig unterschiedlichen Positionen der Platine befinden können, da die Unterschiede bei für zulässig befundenen Platinen so gering sind, dass die Referenzierstifte des Reflektorteils dennoch in die entsprechenden Referenzierbohrungen finden und sich die exakte Position erst ganz zuletzt, am Ende des Einschiebens des Lichtquellenträgers ergibt. Der erfindungsgemäße Fahrzeugscheinwerfer gestattet somit einen einfachen und schnellen Wechsel der LED-Lichtquellen bei automatischer Neureferenzierung des Reflektorteils, sodass die Reflektoren nicht ausgebaut oder auch nur beführt werden müssen, um sie bezüglich der neuen LED-Positionen auszurichten.

Der erfindungsgemäße Fahrzeugscheinwerfer ist bevorzugt dahingehend weitergebildet, dass der Lichtquellenträger eine Platine umfasst, auf der die Lichtquellen und die Referenzierelemente angeordnet sind. Der Lichtquellenträger besteht somit aus einem Trägerteil, auf dem eine Platine bzw. Leiterplatte, die die Lichtquellen trägt, festlegbar ist. Während es im Rahmen der vorliegenden Erfindung somit denkbar ist, die Lichtquellen auch ohne eine Leiterplatte auf dem Lichtquellenträger festzulegen, in welchem Fall sich die Referenzierelemente am Trägerteil befinden, beispielsweise in Form von Bohrungen im Trägerteil, sieht die bevorzugte Variante, welche im Folgenden auch ausführlich beschrieben wird, vor, die Lichtquellen auf einer Platine bzw. Leiterplatte anzuordnen, in welchem Fall sich auch die Referenzierelemente auf der Platine befinden und die Platine wiederum auf dem Trägerteil angeordnet ist. Wann immer in der folgenden Beschreibung auf die Platine Bezug genommen wird, kann die entsprechende Information auch auf den Fall bezogen werden, dass die Lichtquellen ohne die Zwischenschaltung einer Platine direkt am Trägerteil angeordnet sind.

Erfingdungsgemäß sorgt der Mitnehmer für den Reflektorteil dafür, dass der Reflektorteil beim Einschieben des Lichtquellenträgers in den Führungsteil entlang der Führungsschienen verschoben wird, wobei die Ausgestaltung der Führungsschienen geeignet ist, den Reflektorteil aus einer Position, in der die Referenzierelemente bzw. -stifte am Reflektorteil nicht in die entsprechenden Referenzierelemente bzw. -bohrungen am Lichtquellenträger eingreifen, in eine Position zu verbringen, in der die Referenzierelemente bzw. -stifte mit den Referenzierelementen bzw. -bohrungen zusammenwirken. Es wird dem Fachmann klar sein, dass es im Falle von Bohrungen und Stiften hierbei zu einer Absenkung des Reflektorteils in Richtung der Platine kommen muss, um die Stifte in die Bohrungen zu bringen. Andererseits muss es demgemäß beim Herausziehen des Lichtquellenträgers zu einem Anheben des Reflektorteils von der Platine kommen, um den Reflektorteil freizugeben. Solange sich die Referenzierstifte in den Referenzierbohrungen befinden, wird der Reflektorteil beim Herausziehen des Lichtquellenträgers gemeinsam mit diesem bewegt und durch die Wirkung der Führungsschienen angehoben. Sobald die Referenzierstifte jedoch ausser Eingriff gelangen, erfolgt keine weitere Verschiebung in den Führungsschienen und somit kann auch keine zusätzliche Anhebebewegung des Reflektorteil herbeigeführt werden. Folglich liegt der Reflektorteil beim weiteren Herausziehen des Lichtquellenträgers zumindest mit den Referenzierstiften auf den Leiterzügen der Platine auf und kann beim weiteren Herausziehen Kratzer auf der Oberfläche der Platine und insbesondere auf den Leiterbahnen der Platine verursachen. Um diesem Umstand abzuhelfen, ist es gemäß einer bevorzugten Ausführungsform der vorliegenden Erfindung vorgesehen, dass am Lichtquellenträger ein Auswerfer für den Reflektorteil vorgesehen ist, um den Reflektorteil bei einem Herausziehen des Lichtquellenträgers entlang der Führungsschienen in eine Freigabeposition zu verschieben, in der Referenzierstifte am Reflektorteil mittels der Führungsschienen in eine von den Leiterzügen des Lichtquellenträgers freigestellte Position angehoben sind. Es ist somit ein eigener Bauteil vorgesehen, der ein Verschieben des Reflektorteils entlang der Führungsschienen beim Herausziehen des Lichtquellenträgers auch dann sicherstellt, wenn die Referenzierstifte durch die Führung in den Führungsschienen nicht mehr mit den Referenzierbohrungen in der Platine in Eingriff stehen, sodass eine Führung in den Führungsschienen so lange erfolgen kann, bis die Referenzierstifte durch die Wirkung der Führungsschienen beim Herausziehen des Reflektorteils, wobei es erfindungsgemäß zu einem Verschieben des Reflektorteils in den Führungsschienen des Führungsteils kommt, ausreichend von der Platine beabstandet sind, sodass es beim gänzlichen Herausziehen des Lichtquellenträgers zu keinen Beschädigungen von Leiterzügen der Platine durch die Referenzierstifte kommt.

Um eine gute Führung des Reflektorteils am Lichtquellenträger zu gewährleisten, ist die Erfindung bevorzugt dahingehend weitergebildet, dass der Mitnehmer am Reflektorteil Referenzierbohrungen für den Eingriff von Referenzierstiften am Lichtquellenträger aufweist.

LED-Lichtquellen weisen eine hohe Energiedichte auf, weshalb im Regelfall Vorkehrungen getroffen werden müssen, um die sehr punktuell im Bereich der LED-Lichtquellen auftretende Wärme effizient von der Platine abzuführen. Die Erfindung ist in diesem Zusammenhang daher bevorzugt dahingehend weitergebildet, dass der Lichtquellenträger als Kühlkörper für die Lichtquellen ausgebildet ist. Der Lichtquellenträger, der in seiner grundsätzlichen Funktion eine ebene Montagefläche für die Lichtquellen bzw. für die Platine bereitstellt, ist gemäß dieser bevorzugten Ausführungsform aus einem Material hergestellt, welches eine möglichst gute Wärmeleitfähigkeit aufweist und eine ausreichende Masse hat, um die punktuell auf der Platine auftretende Wärme im Bereich der LED-Lichtquellen aufzunehmen und im Kühlkörper zu verteilen.

In diesem Zusammenhang ist es besonders bevorzugt, wenn der Lichtquellenträger aus Aluminiumguss besteht und an seinem von der Platine abgewandten Ende eine Mehrzahl von Kühlelementen aufweist.

Anders als der Lichtquellenträger besteht der Führungsteil gemäß einer bevorzugten Ausführungsform der vorliegenden Erfindung aus Kunststoff. Kunststoffe lassen sich zum einen gut spritzgießen und bitten zum anderen ausreichende Festigkeit und eine gute Beständigkeit des Führungsteils.

In der bisherigen Beschreibung und auch in den Ansprüchen wurde von einem Reflektorteil gesprochen, der in Führungsschienen für einen Reflektorteil verschoben wird, wenn der Lichtquellenträger mit der Platine in den Führungsteil eingeschoben bzw. aus dem Führungsteil herausgezogen wird, um die Referenzierelemente bzw. -stifte am Reflektorteil mit dem entsprechenden Referenzierelemente bzw. -bohrungen in der Platine in Eingriff und außer Eingriff zu bringen. Es kann hierbei gemäß einer bevorzugten Ausführungsform der vorliegenden Erfindung vorgesehen sein, dass der Reflektorteil eine Mehrzahl von Reflektoren umfasst. Wie dies weiter unten aus der Figurenbeschreibung noch deutlicher hervorgehen wird, kann der Reflektorteil mehrere Reflektoren ausbilden, um im Zusammenspiel mit den entsprechenden LED-Lichtquellen unterschiedlicher Lichtfunktionen des Fahrzeugscheinwerfers zu ermöglichen.

Obwohl die Erfindung bisher vor allem Bezugnahme auf einen Lichtquellenträger, eine Platine und einen Reflektorteil beschrieben wurde, kann es gemäß einer bevorzugten Ausführungsform der vorliegenden Erfindung vorgesehen sein, dass am Führungsteils Führungsschienen für zumindest zwei einander bezüglich der Lichtquellenträgerebene bzw. des Trägerteils gegenüberliegende Reflektorteil ausgebildet sind, wobei sämtliche beschriebenen Details in gleicher Weise für die einander gegenüberliegenden Reflektorteile sowie die zugehörigen Platinen und Führungsschienen gelten können.

Wie bereits mehrfach erwähnt, ist es im Zusammenhang mit der vorliegenden Erfindung bevorzugt, dass die zumindest eine Lichtquelle als LED-Lichtquelle ausgebildet ist. Die Erfindung kann jedoch auch überall dort vorteilhaft eingesetzt werden, wo sehr kleine Lichtquellen, die aufgrund ihrer geringen Größe eine besonders präzise Ausrichtung der entsprechenden Reflektoren erfordern, in einem Fahrzeugscheinwerfer eingesetzt zu werden.

Die Erfindung wird nachfolgend anhand eines von der Zeichnung schematisch dargestellten Ausführungsbeispiels näher erläutert. In dieser zeigen
Fig. 1 eine perspektivische Gesamtansicht eines erfindungsgemäßen Lichtmoduls;
Fig. 2 eine perspektivische Darstellung des Paars von Führungsschienen für den Reflektorteil;
Fig. 3 eine perspektivische Darstellung eines Führungsteils für einen erfindungsgemäßen Fahrzeugscheinwerfer;
Fig. 4 eine perspektivische Darstellung eines Lichtquellenträgers umfassend eine Platine;
Fig. 5 und Fig. 6 Reflektorteile in perspektivischer Darstellung;
Fig. 7 eine Schnittdarstellung durch ein Lichtmodul eines erfindungsgemäßen Fahrzeugscheinwerfers;
Fig. 8 eine Detailansicht des durch den Kreis A gekennzeichneten Bereichs aus Fig. 7;
Fig. 9 eine Schnittdarstellung des Lichtmoduls, wobei Referenzierstifte in Eingriff mit der Platine sind;
Fig. 10 eine Darstellung des Lichtmoduls gemäß Fig. 8, bei der die Referenzierstifte nicht in die Platine eingreifen; und
Fig. 11 eine perspektivische Darstellung zweier Reflektorteile und der zugehörigen Führungsschienen.

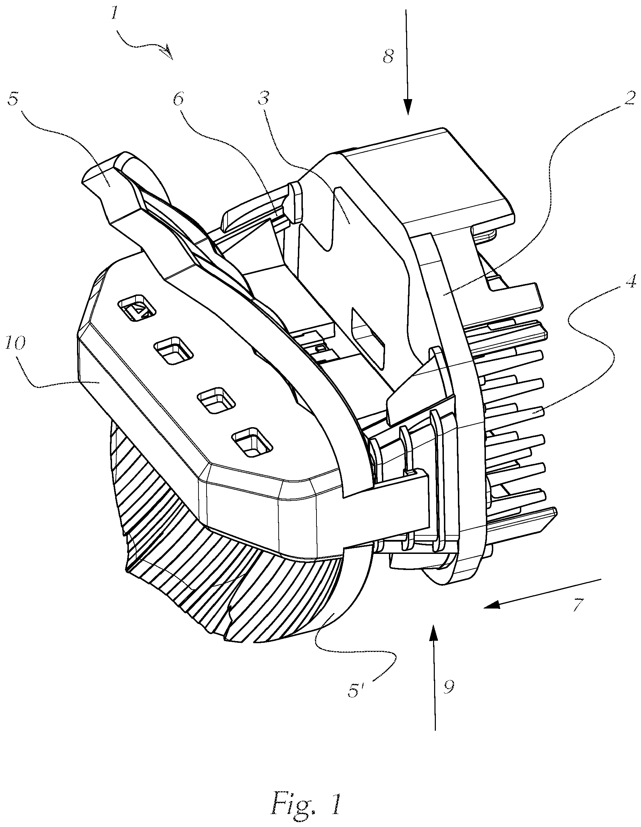

In Fig. 1 ist ein Lichtmodul eines erfindungsgemäßen Fahrzeugscheinwerfers mit 1 bezeichnet. Das Lichtmodul 1 besteht aus einem Führungsteil 2, in welchen ein als Kühlkörper ausgebildeter Lichtquellenträger 3 mit Kühlelementen 4 eingeschoben werden kann. Beim Einschieben des Lichtquellenträgers 3 in den Führungsteil 2 wird ein Reflektorteil 5 (bzw. 5') entlang von Führungsschienen 6 verschoben, wobei wie in Fig. 1 bereits zu erkennen ist, die Führungsschienen 6 dergestalt ausgeformt sind, dass es beim Verschieben des Lichtquellenträgers 3 in Richtung des Pfeils 7 und damit beim Verschieben des Reflektorteil 5 (bzw. 5') in Richtung des Pfeils 7 aufgrund der geneigten Anordnung der Führungsbahnen der Führungsschienen 6 ein Absenken des Reflektorteils 5 in Richtung des Pfeils 8 erfolgt. Ebenso wird der Reflektorteil 5' in Richtung des Pfeils 9 beim Einschieben verschoben. Mit 10 ist eine Abdeckung bezeichnet.

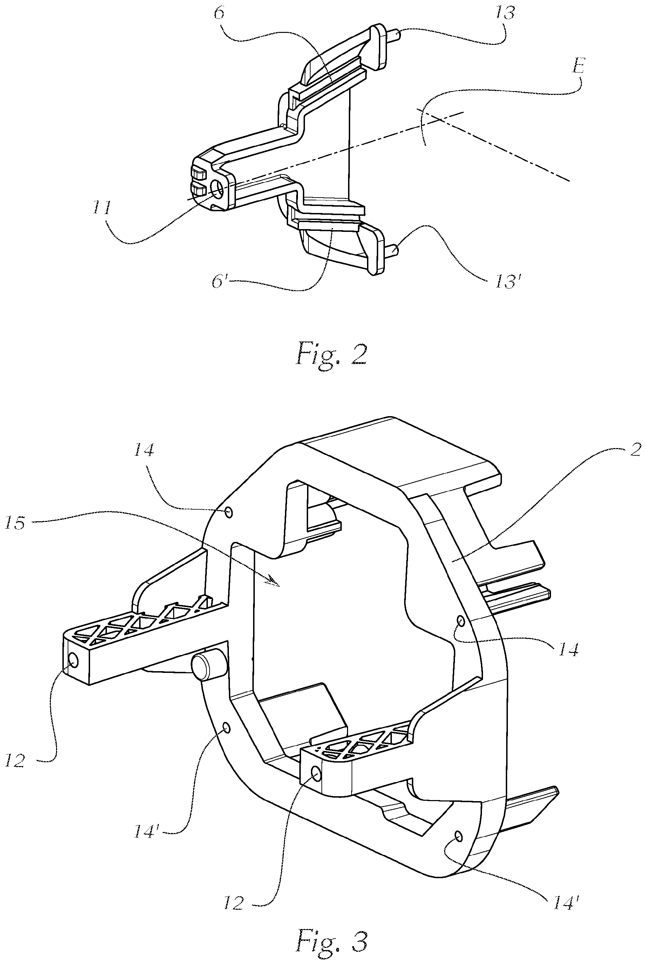

In Fig. 2 ist ein Paar von Führungsschienen 6 in einem Teil des Führungsteils 2 dargestellt. Das Paar von Führungsschienen 6 ist bezüglich einer durch die beiden strichlierten Linien symbolisierten Lichtquellenträgerebene E geneigt und geeignet, in Fig. 2 nicht dargestellte Reflektorteile aufzunehmen und zu führen. Mit 11 ist eine Bohrung bezeichnet, die dem Festlegen des in Fig. 2 dargestellten Teils dienen, wobei beispielsweise nicht dargestellte Schrauben die Bohrung 11 und die Bohrungen 12 in Fig. 3 zur Festlegung durchsetzen können. Weiters greifen Stifte 13 bzw. 13' in entsprechende Bohrungen 14 bzw. 14' ein (Fig. 3). In Fig. 3 ist darüber hinaus zu erkennen, dass der Führungsteil 2 über eine große Ausnehmung 15 verfügt, in die ein in Fig. 3 nicht dargestellter Lichtquellenträger 3 einschiebbar ist.

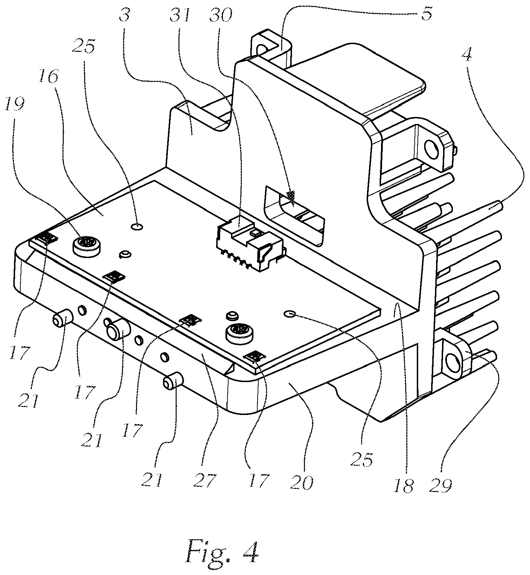

Fig. 4 zeigt nun den Lichtquellenträger 3 mit einer auf dem Trägerteil 20 des Lichtquellenträgers 3 festgelegten Platine 16 mit darauf befindlichen LED-Lichtquellen 17. Der Lichtquellenträger 3 bietet im Wesentlichen eine ebene Auflagefläche 18 für die Platine 16, wobei die Platine 16 im vorliegenden Fall mit Hilfe von Schrauben 19 festgelegt ist, die Festlegung jedoch auch auf jede andere erdenkliche Art ausgeführt sein kann. Es ist für den Fachmann offensichtlich, dass gegenüberliegend der Auflagefläche 18 eine weitere Auflagefläche vorgesehen sein kann, auf der sämtliche bereits beschriebenen und noch zu beschreibenden Funktionalitäten identisch realisiert sein können. Mit 4 sind Kühlelemente bezeichnet, die dazu dienen, die an den LED-Lichtquellen 17 gebildete Wärme, die durch den Trägerteil 20 abgeleitet wird, an die Umgebung abzugeben und somit eine effiziente Kühlung der LED-Lichtquellen 17 zur Verfügung zu stellen. Befestigungslaschen 29 dienen der Festlegung des Lichtquellenträgers 3 am Führungsteil 2. Weiters sind mit 21 Referenzierstifte für entsprechende Referenzierbohrungen am Reflektorteil dargestellt. Fig. 4 zeigt ausserdem eine Öffnung 30 in unmittelbarer Nähe eines Steckers 31 auf der Platine, was es ermöglicht, die Platine vor dem Herausziehen des Lichtquellenträgers 3 von einem entsprechenden Kabel zu trennen.

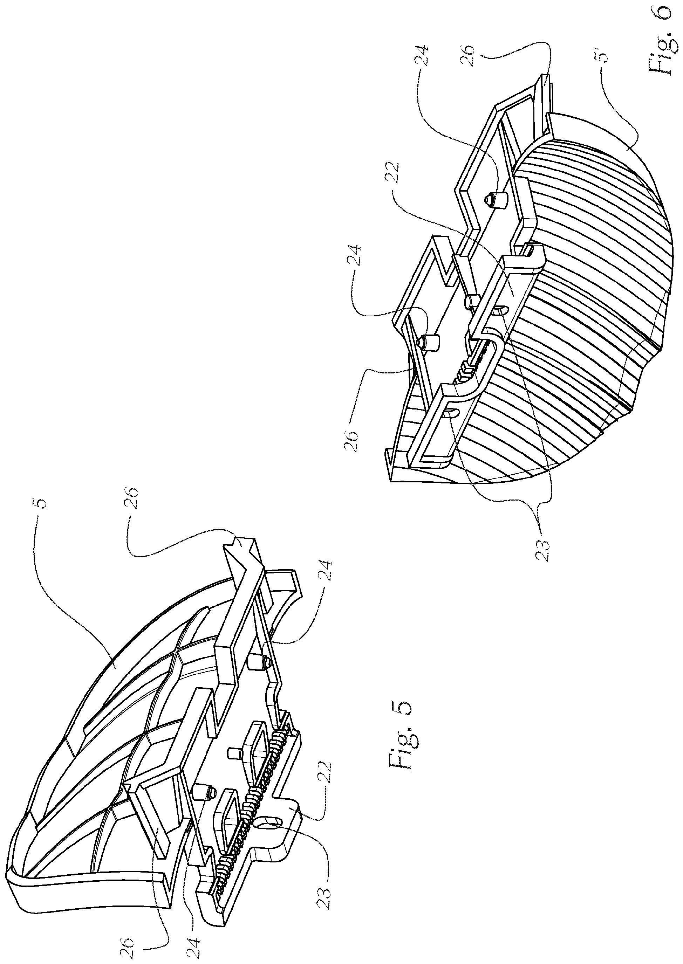

In Fig. 5 ist ein Reflektorteil 5 dargestellt, welcher einen Mitnehmer 22 mit einer Referenzierbohrung 23 für den in Fig. 4 dargestellten Referenzierstift 21 aufweist. Der Reflektorteil 5 verfügt über Referenzierstifte 24, die in entsprechende Referenzierbohrungen 25 in der Platine 16 eingreifen können, wenn sich der Reflektorteil 5 in einer korrekten Position bezüglich der LED-Lichtquellen 17 befindet (vgl. Fig. 4). Dies wird durch die Wirkung der Führungsschienen 6 sichergestellt, welcher mit entsprechenden Schienen 26 am Reflektorteil 5 zusammenwirken.

Die soeben beschriebenen Teile sind in der Darstellung des zweiten Reflektorteil 5' gemäß Fig. 6 mit gleichen Bezugszeichen versehen.

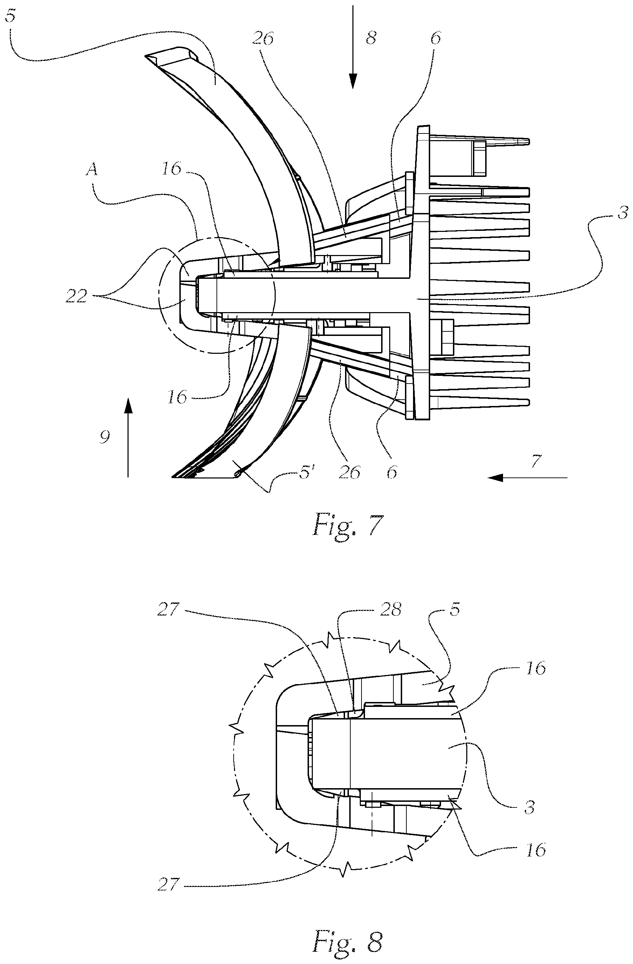

In Fig. 7 ist zu erkennen, dass der Lichtquellenträger 3 mit den Mitnehmern 22 der Reflektorteile 5 bzw. 5' zusammenwirkt, wobei die Reflektorteile 5 und 5' beim Einschieben des Lichtquellenträgers 3 in Richtung des Pfeils 7 entlang der Führungsschienen 6 in Richtung der Pfeile 8 und 9, d.h. auf die jeweilige Platine 16 zu bewegt werden.

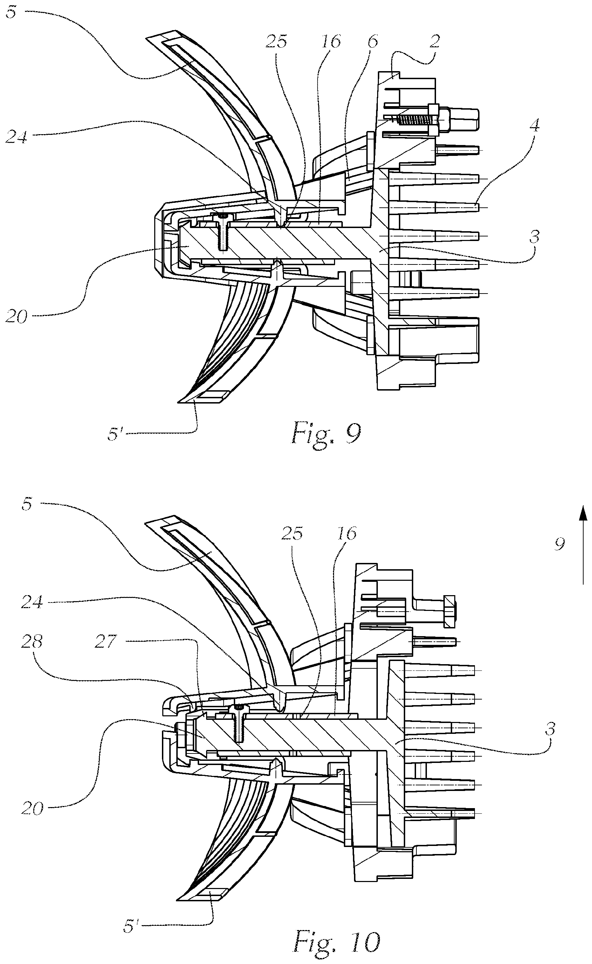

In Fig. 8 ist ein Auswerfer 27 am Lichtquellenträger 3 dargestellt, der mit einem entsprechenden Gegenstück 28 am Reflektorteil 5 zusammenwirkt, um den Reflektorteil 5 bei einem Herausziehen des Lichtquellenträgers 3 entlang der Führungsschienen 6 in eine Freigabeposition zu verschieben, in der die in Fig. 8 und 9 dargestellten Referenzierstifte 24 in eine von den Leiterzügen der Platine 16 freigestellte Position angehoben sind.

Dies ist wie bereits erwähnt in Fig. 9 zu erkennen, wo die Referenzierstifte 24 in die Platine 16 und insbesondere in Referenzierbohrungen 25 in der Platine 16 eingreifen und für eine optimale Ausrichtung des Reflektorteils 5 zu den in Fig. 9 nicht dargestellten LED-Lichtquellen sorgen. Während in Fig. 9 der Zustand dargestellt ist, in dem der Lichtquellenträger 3 in den Führungsteil 2 eingeschoben ist, sodass der Reflektorteil 5 gemeinsam mit dem Lichtquellenträger 3 entlang der Führungsschienen 6 nach vorne geschoben wurde, um die Referenzierstifte 24 am Reflektorteil 5 beim Einschieben des Lichtquellenträgers 3 mit den Referenzierbohrungen 25 in der Platine 16 in Wirkverbindung zu bringen, ist in Fig. 10 ein Zustand gezeigt, in dem der Lichtquellenträger 3 zurückgezogen wurde, wobei durch die Wirkung des Auswerfers 27 der Reflektorteil 5 nach hinten gezogen und dadurch nach oben (Pfeil 9) verschoben wurde, so dass die Referenzierstifte 24 nicht mehr in Eingriff mit den Referenzierbohrungen 25 auf der Platine 16 stehen. Durch die Wirkung des Mitnehmer 27, der mit dem Gegenstück 28 zusammenwirken konnte, wurde der Reflektorteil 5 soweit angehoben, dass ein ausreichender Abstand zwischen den Referenzierstiften 24 und den Leiterzügen der Platine 16 hergestellt wurde, um Beschädigungen der Platine 16 beim weiteren Herausziehen des Lichtquellenträgers 3 zu vermeiden.

Wie bereits weiter oben erwährt, können sämtliche beschriebene Funktionalitäten auch auf der Unterseite des Lichtquellenträgers 3, d.h. auf der Unterseite des Trägerteils 20, erzielt werden (betreffen Reflektorteil 5'), wobei die vorliegende Beschreibung zu Zwecken der Kürze und Klarheit weitgehend auf die Wiederholung der Funktionen und Funktionsabläufe verzichtet.

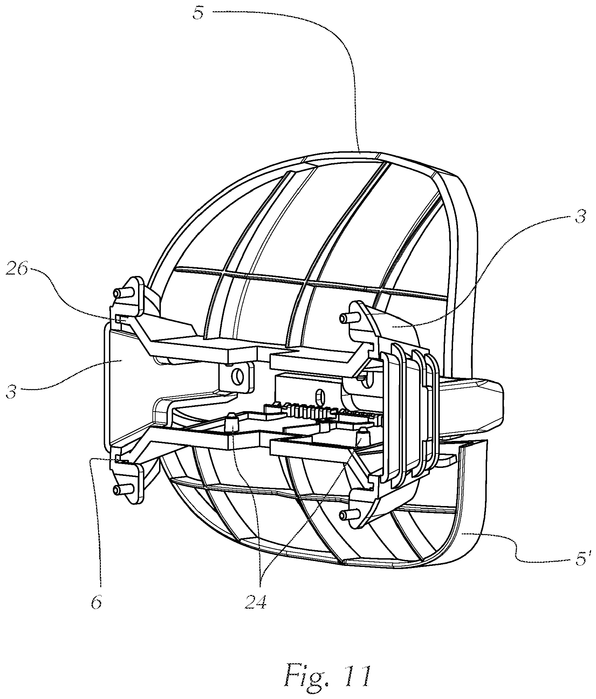

In Fig. 11 ist nochmals das Zusammenwirken des Reflektorteils 5 mit dem Führungsteil 2 dargestellt und es ist zu erkennen, dass die Schienen 26 an den Reflektorteilen 5 mit den entsprechenden Führungsschienen 6 zusammenwirken, um eine Führung des Reflektorteils 5 (bzw. 5') dergestalt zu ermöglichen, dass die Referenzierstifte 24 am Reflektorteil 5 bzw. 5' beim Einschieben des in Fig. 10 nicht dargestellten Lichtquellenträgers 3 mit den entsprechenden Referenzierbohrungen in der Platine in Wirkverbindung treten.

### Bezugszeichenliste:

- 1: Fahrzeugscheinwerfer
- 2: Führungsteil
- 3: Platinenträger
- 4: Kühlelemente
- 5,5': Reflektor
- 6: Führungsschiene
- 7, 8, 9: Pfeil
- 10: Blende
- 11: Bohrung
- 12: Bohrung
- 13: Referenzierstift
- 14: Referenzierbohrung
- 15: Ausnehmung
- 16: Platine
- 17: LED-Lichtquelle
- 18: Auflagefläche
- 19: Schraube
- 20: Trägerteil
- 21: Referenzierstift
- 22: Mitnehmer
- 23: Bohrung
- 24: Referenzierstift
- 25: Referenzierbohrung
- 26: Schiene
- 27: Auswerfer
- 28: Gegenstück
- 29: Befestigungslasche
- 30: Öffnung
- 31: Stecker

## Patentansprüche

1. Fahrzeugscheinwerfer umfassend ein Lichtmodul (1) mit einem Lichtquellenträger (3), mit zumindest einer Lichtquelle (17) und einem der zumindest einen Lichtquelle (17) zugeordneten Reflektorteil (5), wobei Referenzierelemente (24) am Reflektorteil (5) mit entsprechenden Referenzierelementen (25) am Lichtquellenträger (3) in Wirkverbindung bringbar sind, **dadurch gekennzeichnet, dass** der Lichtquellenträger (3) in einen Führungsteil (2) mit Führungsschienen (6) für den Reflektorteil (5) einschiebbar ist und der Reflektorteil (5) einen dem Lichtquellenträger (3) zugeordneten Mitnehmer (22) zum gemeinsamen Verschieben des Reflektorteils (5) mit dem Lichtquellenträger (3) entlang der Führungsschienen (6) aufweist, wobei die Führungsschienen (6) ausgeformt sind, um die Referenzierelemente (24) am Reflektorteil (5) beim Einschieben des Lichtquellenträgers (3) mit den entsprechenden Referenzierelementen (25) am Lichtquellenträger (3) in Wirkverbindung zu bringen.

2. Fahrzeugscheinwerfer nach Anspruch 1, **dadurch gekennzeichnet, dass** der Lichtquellenträger (3) eine Platine umfasst, auf der die Lichtquellen und die Referenzierelemente (25) angeordnet sind.

3. Fahrzeugscheinwerfer nach Anspruch 2, **dadurch gekennzeichnet, dass** am Lichtquellenträger (3) ein Auswerfer (27) für den Reflektorteil (5) vorgesehen ist, um den Reflektorteil (5) bei einem Herausziehen des Lichtquellenträgers (3) entlang der Führungsschienen (6) in eine Freigabeposition zu verschieben, in der Referenzierstifte (24) am Reflektorteil (5) mittels der Führungsschienen (6) in eine von den Leiterzügen des Lichtquellenträgers (3) freigestellte Position angehoben sind.

4. Fahrzeugscheinwerfer nach einem der Ansprüche 1 bis 3, **dadurch gekennzeichnet, dass** der Mitnehmer (22) am Reflektorteil (5) zumindest eine Referenzierbohrung (23) für den Eingriff von Referenzierstiften (21) am Lichtquellenträger (3) aufweist.

5. Fahrzeugscheinwerfer nach einem der Ansprüche 1 bis 4, **dadurch gekennzeichnet, dass** der Lichtquellenträger (3) als Kühlkörper für die Lichtquellen (16) ausgebildet ist.

6. Fahrzeugscheinwerfer nach einem der Ansprüche 2 bis 5, **dadurch gekennzeichnet, dass** der Lichtquellenträger (3) aus Aluminiumguss besteht und an seiner von der Platine (16) abgewandten Ende eine Mehrzahl von Kühlelementen (4) aufweist.

7. Fahrzeugscheinwerfer nach einem der Ansprüche 1 bis 6, **dadurch gekennzeichnet, dass** der Führungsteils (2) aus Kunststoff besteht.

8. Fahrzeugscheinwerfer nach einem der Ansprüche 1 bis 7, **dadurch gekennzeichnet**, das der Reflektorteil (5) eine Mehrzahl von Reflektoren umfasst.

9. Fahrzeugscheinwerfer nach einem der Ansprüche 1 bis 8, **dadurch gekennzeichnet, dass** am Führungsteil (2) Führungsschienen (6) für zumindest zwei einander bezüglich der Lichtquellenträgerebene (E) gegenüberliegende Reflektorteile (5, 5') ausgebildet sind.

10. Fahrzeugscheinwerfer nach einem der Ansprüche 1 bis 9, **dadurch gekennzeichnet, dass** die zumindest eine Lichtquelle (17) als LED-Lichtquelle ausgebildet ist.

## Claims

1. A vehicle headlamp comprising a light module (1) with a light source carrier (3), with at least one light source (17) and a reflector part (5) associated with the at least one light source (17), wherein referencing elements (24) on the reflector part (5) can be brought into operative connection with corresponding referencing elements (25) on the light source carrier (3), **characterised in that** the light source carrier (3) can be inserted into a guide part (2) having guide rails (6) for the reflector part (5) and the reflector part (5) has a catch (22) associated with the light source carrier (3) for joint displacement of the reflector part (5) with the light source carrier (3) along the guide rails (6), wherein the guide rails (6) are shaped to bring the referencing elements (24) on the reflector part (5) into operative connection with the corresponding referencing elements (25) on the light source carrier (3) when the light source carrier (3) is inserted.

2. The vehicle headlamp according to claim 1, **characterised in that** the light source carrier (3) comprises a printed circuit board, on which the light sources and the referencing elements (25) are arranged.

3. The vehicle headlamp according to claim 2, **characterised in that** an ejector (27) for the reflector part (5) is provided on the light source carrier (3) in order to, when removing the light source carrier (3), shift the reflector part (5) along the guide rails (6) into a release position, in which referencing pins (24) on the reflector part (5) are raised by means of the guide rails (6) into a position released from the conductor tracks of the light source carrier (3).

4. The vehicle headlamp according to any one of claims 1 to 3, **characterised in that** the catch (22) on the reflector part (5) has at least one referencing bore (23) for the engagement of referencing pins (21) on the light source carrier (3).

5. The vehicle headlamp according to any one of claims 1 to 4, **characterised in that** the light source carrier (3) is formed as a heat sink for the light sources (16).

6. The vehicle headlamp according to any one of claims 2 to 5, **characterised in that** the light source carrier (3) is made of cast aluminium and has a plurality of cooling elements (4) at its end remote from the printed circuit board (16).

7. The vehicle headlamp according to any one of claims 1 to 6, **characterised in that** the guide part (2) is made of plastic.

8. The vehicle headlamp according to any one of claims 1 to 7, **characterised in that** the reflector part (2) comprises a plurality of reflectors.

9. The vehicle headlamp according to any one of claims 1 to 8, **characterised in that** guide rails (6) for at least two reflector parts (5, 5') opposite one another in respect of the light source carrier plane (E) are formed on the guide part (2).

10. The vehicle headlamp according to any one of claims 1 to 9, **characterised in that** the at least one light source (17) is formed as an LED light source.

## Revendications

1. Phare de véhicule comportant un module lumineux (1) pourvu d'un support (3) de sources de lumière, d'au moins une source de lumière (17) et d'une partie réflecteur (5) associée à ladite au moins une source de lumière (17), des éléments de repérage (24) sur la partie réflecteur (5) étant aptes à être amenés en liaison fonctionnelle avec des éléments de répérage correspondants (25) sur le support (3) de sources de lumière, **caractérisé par le fait que** le support (3) de sources de lumière est apte à être inséré dans une partie de guidage (2) comportant des rails de guidage (6) pour la partie réflecteur (5) et la partie réflecteur (5) présente un élément d'entraînement (22) associé au support (3) de sources de lumière pour faire coulisser conjointement la partie réflecteur (5) avec le support (3) de sources de lumière le long des rails de guidage (6), les rails de guidage (6) étant formés pour amener les éléments de repérage (24) sur la partie réflecteur (5) lors de l'insertion par coulissement du support (3) de sources de lumière en liaison fonctionnelle avec les éléments de repérage correspondants (25) sur le support (3) de sources de lumière.

2. Phare de véhicule selon la revendication 1, **caractérisé par le fait que** le support (3) de sources de lumière comporte une platine sur laquelle les sources de lumière et les éléments de repérage (25) sont disposés.

3. Phare de véhicule selon la revendication 2, **caractérisé par le fait que**, sur le support (3) de sources de lumière est prévu un éjecteur (27) pour la partie réflecteur (5) pour déplacer la partie réflecteur (5) lors d'une extraction du support (3) de sources de lumière le long des rails de guidage (6) dans une position de libération, dans laquelle des tiges de repérage (24) sur la partie réflecteur (5) sont soulevées au moyen des rails de guidage (6) dans une position libérée des pistes conductrices du support (3) de sources de lumière.

4. Phare de véhicule selon l'une des revendications 1 à 3, **caractérisé par le fait que** l'élément d'entraînement (22) sur la partie réflecteur (5) présente au moins un alésage de repérage (23) pour l'engagement de tiges de repérage (21) sur le support (3) de sources de lumière.

5. Phare de véhicule selon l'une des revendications 1 à 4, **caractérisé par le fait que** le support (3) de sources de lumière est réalisé en tant que corps de refroidissement pour les sources de lumière (16).

6. Phare de véhicule selon l'une des revendications 2 à 5, **caractérisé par le fait que** le support (3) de sources de lumière se compose d'aluminium coulé et présente sur son extrémité tournée à l'opposé de la platine (16) une pluralité d'éléments de refroidissement (4).

7. Phare de véhicule selon l'une des revendications 1 à 6, **caractérisé par le fait que** la partie de guidage (2) se compose de matière plastique.

8. Phare de véhicule selon l'une des revendications 1 à 7, **caractérisé par le fait que** la partie réflecteur (5) comporte une pluralité de réflecteurs.

9. Phare de véhicule selon l'une des revendications 1 à 8, **caractérisé par le fait que**, sur la partie de guidage (2), sont formés des rails de guidage (6) pour au moins deux parties réflecteurs (5, 5') opposées l'une à l'autre par rapport au plan (E) de support de sources de lumière.

10. Phare de véhicule selon l'une des revendications 1 à 9, **caractérisé par le fait que** ladite au moins une source de lumière (17) est formée en tant que source de lumière à LED.
